# EUROPÄISCHE PATENTSCHRIFT

(11) **EP 3 453 651 B1**
(45) Veröffentlichungstag und Bekanntmachung des Hinweises auf die Patenterteilung: **24.12.2025**
(21) Anmeldenummer: 17189934.7
(22) Anmeldetag: 07.09.2017
(51) Int. Cl.: B65G 47/44, B65G 47/51

(54) **TRANSPORT- UND ZUFUEHREINHEIT FUER VORFORMLINGE**
TRANSPORT AND SUPPLY UNIT FOR PREFORMS
UNITÉ DE TRANSPORT ET D'ALIMENTATION POUR PRÉFORMES

(43) Veröffentlichungstag der Anmeldung: 13.03.2019
(73) Patentinhaber: M. Tanner AG, 8406 Winterthur (CH)
(72) Erfinder: Tanner, Marcel, 8303 Bassersdorf (CH)
(74) Vertreter: Schaad, Balass, Menzl & Partner AG

(56) Entgegenhaltungen:
- EP-A1- 2 578 504
- DE-A1- 102012 101 114
- GB-A- 2 263 472
- JP-A- 2017 149 517
- US-A1- 2009 090 595

## Beschreibung

Die Erfindung betrifft eine Transport- und Zuführeinheit für Vorformlinge, insbesondere für PET-Flaschen, wobei die Transport- und Zuführeinheit an ihrem stromaufwärtigen Ende mit Vorformlingen beschickbar ist und die Vorformlinge einer am stromabwärtigen Ende der Transport-und Zuführeinheit angeordneten Fördereinheit zuführt.

Aus der DE 203 08 513 U1 ist eine Vorrichtung zum Zuführen von Vorformlingen bzw. Preforms aus thermoplastischem Kunststoff mit einem Tragring im Bereich des offenen Endes zu einer Blasmaschine zum Herstellen von Hohlkörpern bekannt, mit einem bodennah aufgestellten Silo zur ungeordneten Aufnahme mehrerer Vorformlinge, einem die Vorformlinge in eine mit dem offenen Ende nach oben weisende Position ausrichtenden und zu einer Einzelreihe formierenden Rollensortierer, einem die Vorformlinge ungeordnet vom Silo zum Rollensortierer bewegenden Schrägförderer und mit einer abwärts geneigten, unter den Tragringen angreifende Tragschienen aufweisenden Rutsche, die mehrere mit dem offenen Ende nach oben weisende Vorformlinge in einer Reihe aufnimmt und diese mittels Hangabtrieb der Blasmaschine zuführt, wobei der Rollensortierer bodennah aufgestellt ist und zwischen den Rollensortierer und das erhöhte obere Ende der Rutsche ein die Vorformlinge anhebender Höhenförderer eingeschaltet ist. Bei dieser Vorrichtung wird das Silo von oben her, mittels einer entsprechenden Kippvorrichtung, durch Einschütten von in Kästen angelieferten Vorformlingen periodisch befüllt.

Nachteilig an dieser Lösung ist, dass die Vorformlinge durch den Schüttvorgang bzw. den Aufprall im Silo beschädigt bzw. verkratzt werden können und dass hierbei ein sehr hoher Lärmpegel erzeugt wird.

In der EP 2 578 504 A1 wird ein aseptisches Abfüllsystem mit einer Vorformlingsformmaschine beschreiben. Die EP 2 578 504 A1 offenbart eine Transport- und Zuführeinheit für Vorformlinge, wobei die Transport- und Zuführeinheit an ihrem stromaufwärtigen Ende mit Vorformlingen beschickbar ist und die Vorformlinge einer am stromabwärtigen Ende der Transport-und Zuführeinheit angeordneten Fördereinheit zuführt, wobei die Transport- und Zuführeinheit ein erstes Transportband aufweist, wobei am stromabwärtigen Ende des ersten Transportbandes eine erste trichterartige Vorrichtung vorgesehen ist, wobei die erste trichterartige Vorrichtung zwischen einer angehobenen Position zur Aufnahme der Vorformlinge vom ersten Transportband und einer abgesenkten Position zur Zuführung der aufgenommenen Vorformlinge zu einem zweiten trichtartigen Vorrichtung bewegbar ist, wobei die Transport-und Zuführeinheit ein zweites Transportband aufweist, wobei die Vorformlinge durch die zweite trichterartige Vorrichtung auf das zweite Transportband gelangen, welches die Vorformlinge der an seinem stromabwärtigen Ende angeordneten Fördereinheit zuführt, und wobei im Bereich der trichterartigen Vorrichtung zumindest ein Sensor zum Erfassen der Anzahl der in die trichterartige Vorrichtung geladenen Vorformlinge und ein Sensor zum Erfassen der Anzahl der aus der trichterartigen Vorrichtung entladenen Vorformlinge zur Kontrolle des Füllstands mit Vorformlingen vorgesehen sind.

In der WO 2012/126129 A1 wird eine Vorrichtung zum Beschicken einer Förderanlage mit einer grossen Menge von Teilen, wie etwa Vorformlingen bzw. Preforms für Hohlkörper, beschrieben. Die Vorrichtung umfasst dabei eine Kippvorrichtung mit einem schwenkbaren Kipperteil und eine Vorrichtung zur Zwischenspeicherung der Teile, wobei die Vorrichtung zur Zwischenspeicherung ein Silo mit einer abhebbaren Abdeckung ist und die Kippvorrichtung ein mechanisches Verbindungs- und Kraftübertragungselement aufweist, welches mit der abhebbaren Abdeckung des Silos verbunden ist. Auch bei dieser Lösung kann es durch den Schüttvorgang zu Beschädigungen/Kratzern an den Vorformlingen kommen sowie zu einem erhöhten Lärmpegel.

Es ist daher die Aufgabe der vorliegenden Erfindung, eine Vorrichtung bereitzustellen, mittels welcher die Vorformlinge bzw. Preforms auf schonende und möglichst geräuscharme Art und Weise einem nachgeschalteten Modul einer Förderanlage zugeführt werden können.

Diese Aufgabe wird erfindungsgemäss gelöst durch eine Transport- und Zuführeinheit für Vorformlinge, insbesondere für PET-Flaschen, wobei die Transport- und Zuführeinheit an ihrem stromaufwärtigen Ende mit Vorformlingen beschickbar ist und die Vorformlinge einer am stromabwärtigen Ende der Transport- und Zuführeinheit angeordneten Fördereinheit zuführt, wobei die Transport-und Zuführeinheit ein erstes Transportband und ein zweites Transportband aufweist, wobei am stromabwärtigen Ende des ersten Transportbandes eine trichterartige Vorrichtung vorgesehen ist, durch welche die Vorformlinge auf das zweite Transportband gelangen, welches die Vorformlinge der an seinem stromabwärtigen Ende angeordneten Fördereinheit zuführt.

Die erfindungsgemässe Transport- und Zuführeinheit umfasst mithin nicht die vorgeschaltete Beschickungsvorrichtung sowie die nachgeschaltete Fördereinheit.

In einer bevorzugten Ausführungsform der Erfindung läuft die trichterartige Vorrichtung pyramindenstumpfförmig zusammen und weist einen bevorzugt senkrechten Auslauf auf. Durch diese geometrische Ausgestaltung kann die trichterartige Vorrichtung besonders effektiv in der Art eines Speichers bzw. eines Puffers wirken und die Vorformlinge, welche vom ersten Transportband angeliefert werden, auf im Wesentlich kontinuierliche Art und Weise an das zweite Transportband weitergeben (d.h. während der Speicher vorzugsweise stets zwischen einem minimalen und einem maximalen Füllstand gefüllt bleibt). Durch die Bereitstellung der trichterartigen Vorrichtung kann im Übrigen auf ein weiteres Transportband, welches ansonsten zum Auseinanderziehen der Preform-Schüttung zwischen der Kippvorrichtung und dem zweiten (Quer-) Transportband notwendig wäre, verzichtet und so eine Menge Platz eingespart werden.

Im Bereich des ersten Transportbands sind zumindest zwei Sensoren (S1) und (S3), vorzugsweise zumindest drei Sensoren (S1), (S2) und (S3), zur Kontrolle der An- bzw. Abwesenheit von Vorformlingen entlang des ersten Transportbands vorgesehen. Der Sensor (S1) ist dabei im Anfangsbereich des ersten Transportbands angeordnet und der Sensor (S3) im Endbereich des ersten Transportbands; der Sensor (S2) ist bevorzugt im mittleren Bereich des ersten Transportbands angeordnet (d.h. jeweils in der Seitenwand oberhalb des ersten Transportbands). Die Sensoren sind vorzugsweise als Lichtschranken ausgebildet und mit einer (üblichen) Steuerung verbunden.

Stellt etwa der Sensor (S1) fest, dass im Anfangsbereich des ersten Transportbands keine Vorformlinge vorhanden sind, wird die Kippvorrichtung angesteuert, um einen neuen Karton mit Vorformlingen auf das erste Transportband zu kippen.

Stellt der Sensor (S2) fest, dass keine Vorformlinge im mittleren Bereich des ersten Transportbands vorhanden sind, so wird der Antrieb des ersten Transportbands angesteuert und die Bandgeschwindigkeit erhöht. Das Gleiche gilt, wenn der Sensor (S3) feststellt, dass keine Vorformlinge im Endbereich des ersten Transportbands vorhanden sind.

Im Bereich der trichterartigen Vorrichtung sind zumindest ein Maximum-Sensor (S5) und ein Minimum-Sensor (S6), sowie vorzugsweise ein Überfüllungssensor (S4), zur Kontrolle des Füllstands mit Vorformlingen vorgesehen. Die Sensoren (S4), (S5) und (S6) sind ebenfalls mit der Steuerung verbunden.

Der Überfüllungssensor (S4) ist dabei etwas oberhalb der trichterartigen Vorrichtung angeordnet. Stellt der Überfüllungssensor (S4) die Anwesenheit von Vorformlingen in seinem Bereich fest, so ist die trichterartige Vorrichtung überfüllt (d.h. bis über den Rand hinaus gefüllt) und das erste Transportband wird abgeschaltet.

Der Maximum-Sensor (S5) ist etwas unterhalb des Rands der trichterartigen Vorrichtung angeordnet. Stellt der Maximum-Sensor (S5) das Vorhandensein von Vorformlingen in seinem Bereich fest (d.h. maximaler Füllstand erreicht) so wird ggf. die Geschwindigkeit des ersten Transportbands verringert.

Der Minimum-Sensor (S6) ist am unteren Ende des senkrechten Auslaufs der trichterartigen Vorrichtung angeordnet. Wenn der Minimum-Sensor (S6) keine Vorformlinge mehr in seinem Bereich feststellt, ist der minimale Füllstand unterschritten und es wird eine Warnmeldung ausgelöst. Ggf. wird auch die Geschwindigkeit des ersten Transportbands erhöht und/oder ein weiterer Karton mit Vorformlingen auf das erste Transportband gekippt (d.h. je nach Anzeige der Sensoren (S1), (S2) und (S3)).

Bei einem Füllstand zwischen dem Maximum-Sensor (S5) und dem Minimum-Sensor (S6) herrscht ein im Wesentlichen kontinuierlicher Betrieb. Hierbei handelt es sich um den angestrebten Normalbetrieb. Es ist grundsätzlich denkbar, den Sensor (S4) wegzulassen.

In einer weiteren bevorzugten Ausführungsform der vorliegenden Erfindung ist im Bereich des zweiten Transportbands zumindest ein weiterer Sensor (S7) zur Kontrolle der An- bzw. Abwesenheit von Vorformlingen auf dem zweiten Transportband vorgesehen ist, welcher ebenfalls mit der Steuerung verbunden ist. Der Sensor (S7) ist unterhalb der trichterartigen Vorrichtung in einer Seitenwand des zweiten Transportbands angeordnet. Wenn der Sensor (S7) keine Vorformlinge in seinem Bereich detektiert und gleichzeitig der Sensor (S6) die Anwesenheit von Vorformlingen anzeigt, so hat ggf. eine Brückenbildung zwischen dem zweiten Transportband und der trichterartigen Vorrichtung bzw. dem senkrechten Schacht stattgefunden und es liegt eine Verstopfung vor. Hierauf wird ein Alarmsignal erzeugt und die Verstopfung muss manuell durch eine Bedienperson beseitigt werden.

In einer weiteren bevorzugten Ausführungsform der vorliegenden Erfindung sind die Sensoren (S1) bis (S7) als Lichtschranken ausgebildet. Hierdurch kann auf einfache und zuverlässige Weise das Vorhandensein bzw. das Fehlen von Vorformlingen im jeweiligen Bereich detektiert werden.

Das erste Transportband ist als Softband ausgebildet. Auf diese Weise werden Beschädigungen/Kratzer der Vorformlinge beim Schütten auf das erste Transportband vermieden und es kann zusätzlich Lärm vermindert werden. Auch das zweite (Quer-) Transportband kann entsprechend als Softband ausgebildet sein. Die Softbänder sind vorzugsweise aus einem weichen Kunststoffmaterial gefertigt bzw. mit einem solchen beschichtet.

In einer weiteren bevorzugten Ausführungsform der vorliegenden Erfindung sind das erste Transportband und das zweite Transportband im rechten Winkel zueinander angeordnet. Auf diese Weise kann wiederum Platz beim Aufbau der Anlage eingespart werden.

In einer weiteren bevorzugten Ausführungsform der vorliegenden Erfindung sind oberhalb des ersten Transportbands sowie oberhalb der trichterartigen Vorrichtung eine oder mehrere Abdeckungen anordenbar. Die Abdeckungen sind aus hygienischen Gründen vorgesehen und sollen die Vorformlinge vor Staub- und sonstigen Partikeln schützen. Die Abdeckungen können dabei aufklappbar und/oder abnehmbar ausgeführt sein.

In einer weiteren bevorzugten Ausführungsform der vorliegenden Erfindung ist am stromaufwärtigen Ende des ersten Transportbands eine Schräge angeordnet. Die Schräge ist vorzugsweise aus Kunststoffmaterial gebildet und unterstützt die Beschickung des ersten Transportbands durch die Kippvorrichtung, d.h. es bleiben keine Vorformlinge vor dem ersten Transportband liegen.

Eine weitere Schräge ist vorzugsweise an der Schnittstelle zwischen dem ersten Transportband und der trichterartigen Vorrichtung vorgesehen. Auch diese Schräge ist bevorzugt aus Kunststoff gebildet und sorgt dafür, dass hier keine Vorformlinge hängen bleiben.

In einer weiteren bevorzugten Ausführungsform der vorliegenden Erfindung weist das erste Transportband eine Länge L1 zwischen 1800 mm und 2200 mm, vorzugsweise von etwa 2000 mm auf. Durch die Verwendung der erfindungsgemässen trichterartigen Vorrichtung (bzw. des Speichers) kommt man mit einer relativ kurzen Länge des ersten Transportbands aus. Man braucht insbesondere kein zusätzliches - sich an das erste Transportband anschliessende - Transportband vorzusehen, um die Menge an Vorformlingen vor dem zweiten (Quer-) Transportband im Hinblick auf einen möglichst kontinuierlichen Betrieb ausreichend auseinanderzuziehen.

In den beigefügten Zeichnungen sollen zum Zwecke der Anschaulichkeit beispielhafte Ausführungsformen der vorliegenden Erfindung illustriert werden.

Es zeigt:
- Fig. 1: eine Draufsicht auf eine beispielhafte Förderanlage, in welche eine erfindungsgemässe Transport- und Zuführvorrichtung integriert ist;
- Fig. 2: eine perspektivische Ansicht der erfindungsgemässen Transport- und Zuführeinheit;
- Fig. 3: eine Draufsicht auf die erfindungsgemässe Transport- und Zuführeinheit gemäss Fig. 2;
- Fig. 4: eine Frontalansicht der erfindungsgemässen Transport- und Zuführeinheit gemäss Fig. 2;
- Fig. 5: eine perspektivische Ansicht des zweiten Transportbands (mit Gehäuse) der erfindungsgemässen Transport- und Zuführeinheit.

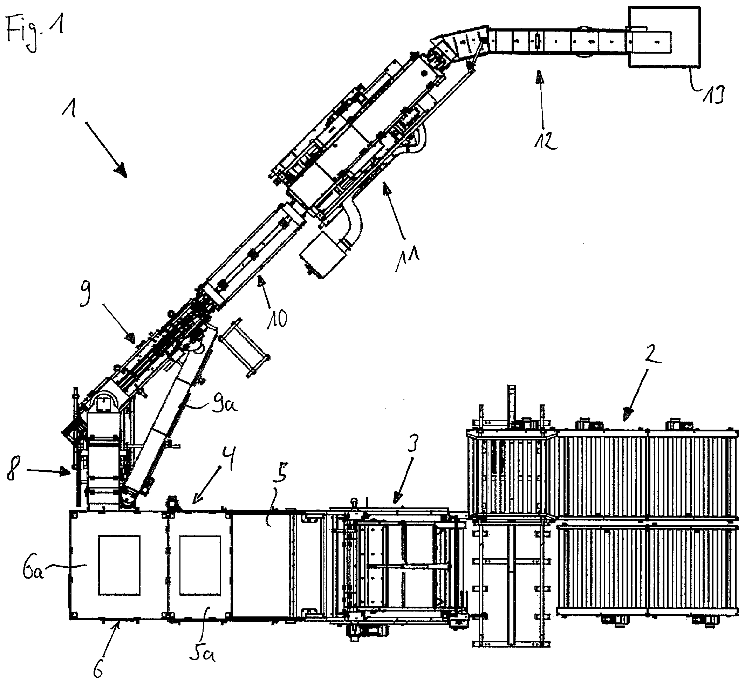

In **Fig. 1** wird eine beispielhafte Förderanlage 1 gezeigt, in welche die erfindungsgemässe Transport- und Zuführeinheit 4 integriert ist. Eine derartige Förderanlage 1 wird etwa vorgesehen, um Vorformlinge in eine Streckblasmaschine zu überführen.

Dabei werden über das Transportrollenband 2 Kartons mit Vorformlingen zu der Kippvorrichtung 3 gebracht, welche jeweils einen Karton aufnimmt und den Inhalt, d.h. die Vorformlinge, auf das erste Transportband 5 der erfindungsgemässen Transport- und Zuführeinheit 4 ausschüttet.

Das erste Transportband 5 bringt die Vorformlinge zu der trichterartigen Vorrichtung bzw. dem Speicher 6 (vorliegend ist über der trichterartigen Vorrichtung 6 eine Abdeckung 6a angeordnet und über dem hinteren Teil des ersten Transportbands eine Abdeckung 5a).

Von dort aus gelangen die Vorformlinge auf das zweite Transportband 7 (hier von der trichterartigen Vorrichtung 6 bzw. deren Abdeckung 6a verdeckt), welches die Vorformlinge an einen Hochförderer 8 übergibt. An den Hochförderer 8 schliesst sich ein üblicher Rollensortierer 9 mit einem Rückführband 9a an.

Stromabwärts des Rollensortierers 9 ist eine Zuführeinheit 10 vorgesehen, welche die Vorformlinge an einen Einlaufstern einer Inspektions- und Auswerfereinheit eines Klemmförderers 11 übergibt, wo die Vorformlinge vereinzelt werden. An den Klemmförderer 11 schliesst sich etwa noch eine Ablaufschiene 12 an, über welche die Vorformlinge in eine, hier lediglich schematisch angedeutete, Streckblasmaschine 13 eingebracht werden.

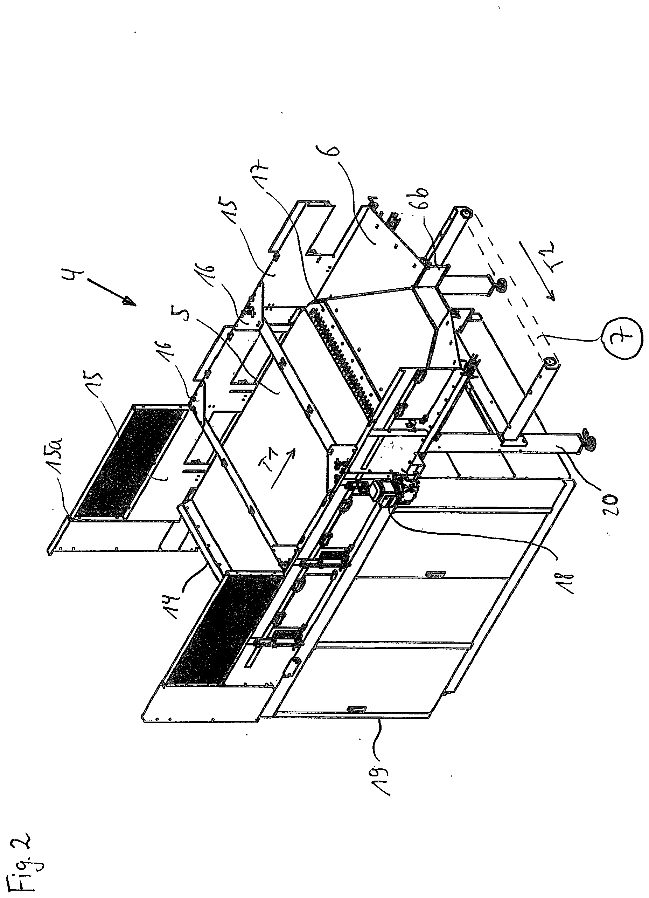

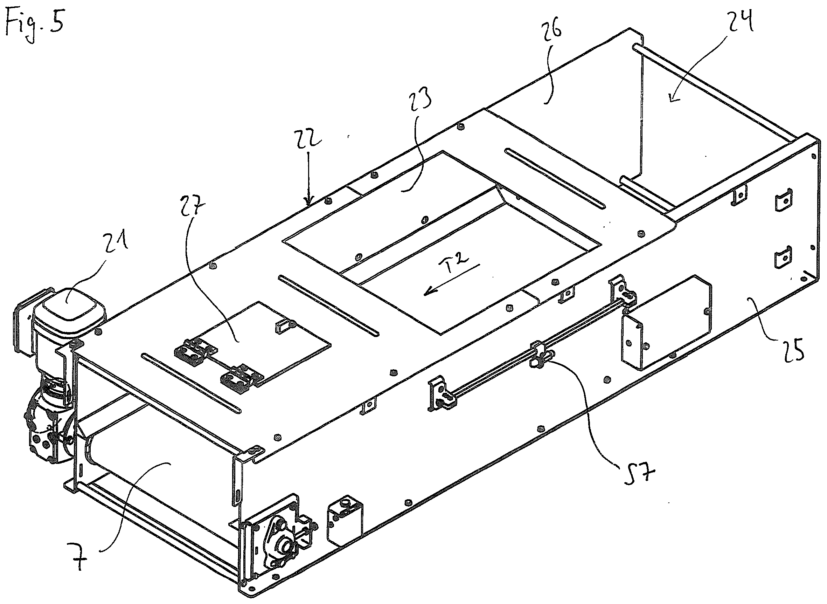

**Fig. 2** zeigt nun eine perspektivische Ansicht der erfindungsgemässen Transport- und Zuführeinheit 4, wobei die trichterartige Vorrichtung 6 teilweise geschnitten dargestellt ist und wobei das zweite Transportband 7 lediglich schematisch angedeutet ist (das zweite Transportband wird in **Fig. 5** separat beschrieben).

Der Bereich mit den erhöhten Seitenwänden 15a, den auf die Seitenwände 15 aufgesetzten Gitterteilen 15b und der Schräge 14 am stromaufwärtigen Ende des ersten Transportbands 5 soll mit der in **Fig. 1** gezeigten Kippvorrichtung 3 dergestalt zusammenwirken, dass bei der Beschickung des ersten Transportbands 5 mit den Vorformlingen keine Vorformlinge seitlich herunterfallen oder an der Schnittstelle zwischen der Kippvorrichtung 3 und dem erstem Transportband 5 liegen bleiben.

Die Fallhöhe der Vorformlinge von der Kippvorrichtung 3 auf das erste Transportband 5, welches regelmässig als Softband ausgebildet ist, beträgt bei der erfindungsgemässen Transport- und Zuführvorrichtung 4 bevorzugt weniger als 100 mm, so dass die Vorformlinge durch den Schüttvorgang keine Beschädigungen/Kratzer davontragen und der Lärmpegel niedrig gehalten werden kann.

Nach dem Schüttvorgang werden die Vorformlinge mittels des ersten Transportbands 5 in der Transportrichtung T1 zu der trichterartigen Vorrichtung 6 gebracht. Das erste Transportband 5 wird mittels des Antriebs 18 angetrieben und von einem Gestell 19 getragen. Zwischen den Seitenwänden 15 erstrecken sich Halterungen 16 für die in **Fig. 1** gezeigten Abdeckungen 5a, 6a des ersten Transportbands 5 und der trichterartigen Vorrichtung 6.

An der Schnittstelle zwischen dem ersten Transportband 5 und der trichterartigen Vorrichtung 6 ist wiederum eine Schräge 17 vorgesehen, welche dafür sorgt, dass die Vorformlinge hier nicht hängen bleiben. Die Vorformlinge gelangen dann in die trichterartige Vorrichtung (bzw. den Speicher) 6, welchen sie nach einer gewissen Anfahrzeit aufzufüllen beginnen und nach einer bestimmten Verweildauer durch den senkrechten Auslass 6b wieder verlassen (Puffer- bzw. Speicherfunktion) und auf das zweite Transportband 7 fallen.

Das zweite Transportband 7 fördert die Vorformlinge in der Transportrichtung T2 (d.h. senkrecht zu der Transportrichtung T1) weg zu dem in **Fig. 1** gezeigten Höhenförderer 8. Die trichterartige Vorrichtung 6 wird von einem Gestell 20 getragen.

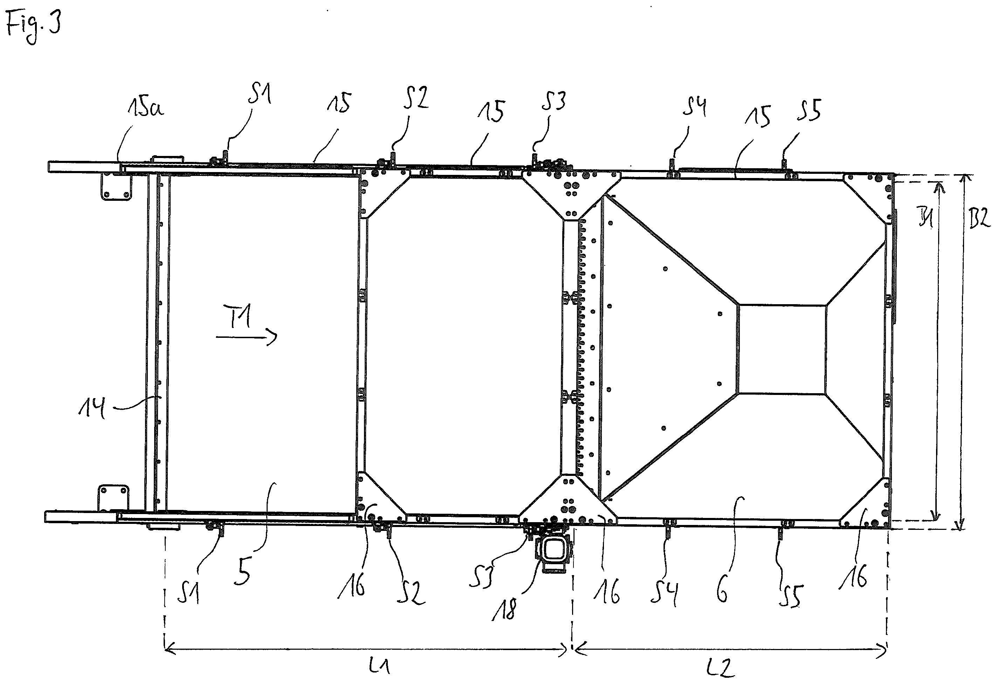

Anhand von **Fig. 3** wird insbesondere die Anordnung der Sensoren S1, S2 und S3 entlang des ersten Transportbands 5 sowie deren Funktionsweise beschrieben.

Wie zu sehen, ist der Sensor S1 im Anfangsbereich des ersten Transportbands 5 angeordnet, der Sensor S2 im mittleren Bereich des ersten Transportbands 5 und der Sensor S3 im Endbereich des ersten Transportbands 5 (d.h. jeweils oberhalb des ersten Transportbands 5 in der Seitenwand 15). Die Sensoren S1, S2 und S3 sind vorzugsweise als Lichtschranken ausgebildet und mit einer üblichen Steuerung (nicht gezeigt) verbunden.

Wenn der Sensor S1 feststellt, dass im Anfangsbereich des ersten Transportbands 5 keine Vorformlinge vorhanden sind, wird entsprechend die Kippvorrichtung 3 angesteuert, um einen neuen Karton mit Vorformlingen auf das erste Transportband 5 zu schütten.

Stellt der Sensor S2 fest, dass keine Vorformlinge im mittleren Bereich des ersten Transportbands 5 vorhanden sind (und der Sensor S1 ist belegt), so wird der Antrieb 18 des ersten Transportbands 5 angesteuert und die Bandgeschwindigkeit erhöht. Das Gleiche gilt, wenn der Sensor S3 feststellt, dass keine Vorformlinge im Endbereich des ersten Transportbands 5 vorhanden sind (und der Sensor S1 und/oder S2 ist belegt).

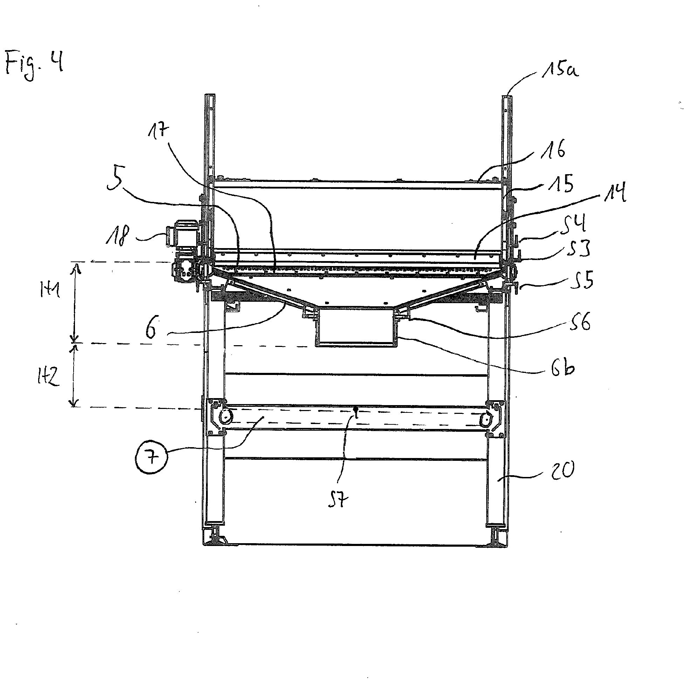

Im Bereich der trichterartigen Vorrichtung 6 sind ausserdem die Sensoren S4 (Überfüllungssensor) und S5 (Maximum-Sensor) angeordnet, wobei der Überfüllungssensor S4 in der Nähe der Schräge 17 in der Seitenwand 15 angeordnet ist und zwar etwas oberhalb der Oberkante der Schräge 14 (vgl. hierzu **Fig. 4**).

Der Maximum-Sensor S5 ist, in Transportrichtung T1 gesehen, ein Stück weit nach dem Überfüllungssensor S4 angeordnet und zwar etwas unterhalb der Unterkante der Schräge 17 (vgl. hierzu **Fig. 4**).

Das erste Transportbands 5 weist eine Länge L1 von 1500 mm bis 2500 mm, vorzugsweise von etwa 2000 mm auf, sowie eine Breite B1 von etwa 1700 mm. Die trichterartige Vorrichtung 6 weist eine Länge L2 von etwa 1660 mm auf sowie eine Breite B2 von etwa 1720 mm.

Anhand von **Fig. 4** wird insbesondere die Anordnung der Sensoren S4, S5 und S6 in vertikaler Richtung entlang der trichterartigen Vorrichtung 6 und des senkrechten Auslaufs 6b sowie deren Funktionsweise erläutert.

Der Überfüllungssensor S4 ist in der Seitenwand 15 angeordnet und zwar etwas oberhalb der Oberkante der Schräge 14, d.h. insbesondere auch oberhalb der Oberkante der trichterartigen Vorrichtung 6. Der Überfüllungssensor S4 zeigt einen Überfüllungszustand der trichterartigen Vorrichtung 6 an.

Der Maximum-Sensor S5 ist an der Unterseite der trichterartigen Vorrichtung 6 angeordnet und zwar etwas unterhalb der Unterkante der Schräge 17. Der Maximum-Sensor zeigt einen maximalen Füllstand der trichterartigen Vorrichtung 6 an.

Der Minimum-Sensor S6 ist in der Seitenwand des senkrechten Auslaufs 6b angeordnet. Der Maximum-Sensor S6 zeigt einen minimalen Füllstand der trichterartigen Vorrichtung 6 an.

Die Sensoren S4, S5 und S6 sind ebenfalls mit der üblichen Steuerung verbunden.

Wenn der Maximum-Sensor S5 das Vorhandensein von Vorformlingen in seinem Bereich feststellt (d.h. der maximale Füllstand ist erreicht), so wird ggf. die Geschwindigkeit des ersten Transportbands 5 verringert, da möglicherweise eine Überfüllung droht.

Stellt jedoch der Überfüllungssensor S4 trotz allem Vorformlinge in seinem Bereich fest, so ist die trichterartige Vorrichtung 6 überfüllt (d.h. bis über den Rand mit Vorformlingen gefüllt) und das erste Transportband 5 wird abgeschaltet.

Wenn das erste Transportband 5 aufgrund eines vom Sensor S4 detektierten Überfüllungszustands abgeschaltet wurde, wird vorzugsweise abgewartet, bis der Füllstand der Vorformlinge wieder bis unter den maximalen Füllstand abgesunken ist, bevor das erste Transportband 5 wieder angeschaltet wird und neue Vorformlinge nachgeliefert werden.

Wenn der Minimum-Sensor S6 keine Vorformlinge in seinem mehr Bereich feststellt, ist der minimale Füllstand unterschritten und es wird eine Warnmeldung ausgelöst. Ggf. wird die Geschwindigkeit des ersten Transportbands 5 erhöht und/oder ein weiterer Karton mit Vorformlingen auf das erste Transportband gekippt (d.h. je nach Anzeige der Sensoren S1, S2 und S3).

Bei einem Füllstand zwischen dem maximalen Füllstand (Sensor S5) und dem minimalen Füllstand (Sensor S6) herrscht ein im Wesentlichen kontinuierlicher Betrieb der erfindungsgemässen Transport- und Zuführeinheit. Hierbei handelt es sich dann um den angestrebten Normalbetrieb.

Unterhalb der trichterartigen Vorrichtung 6 ist das zweite Transportband 7 angeordnet, welches die Vorformlinge zu der stromabwärtigen Fördereinheit 8 bringt (vgl. **Fig. 1**). Die Anordnung und Funktionsweise des Sensors S7 wird weiter unten im Zusammenhang mit **Fig. 5** beschrieben.

Die Höhe H1 von der Unterkante des senkrechten Auslaufs 6b bis zum ersten Transportband 5 beträgt zwischen 240 mm und 320 mm, vorzugsweise etwa 280 mm. Die Höhe H2 vom zweiten Transportband 7 bis zur Unterkante des senkrechten Auslaufs 6b beträgt weniger als etwa 300 mm, vorzugsweise weniger als 200 mm.

In **Fig. 5** wird nunmehr das zweite Transportband 7 mit dem Gehäuse 22 beschrieben. Das zweite Transportband 7 wird, wie in **Fig. 4** oben angedeutet, mit der Transportrichtung T2 senkrecht zu dem ersten Transportband 5 unterhalb der trichterartigen Vorrichtung 6 bzw. dem senkrechten Auslauf 6b montiert. Die obere Gehäuseöffnung 23 fluchtet dabei mit dem senkrechten Auslauf 6b.

Der Antrieb 21 des zweiten Transportbands 7 ist am stromabwärtigen Ende der hinteren Seitenwand 26 angeordnet. Auf der Oberseite des Gehäuses 22 ist ein aufklappbares Sicht- und Kontrollfenster 27 vorgesehen. Das zweite Transportband 7 erstreckt sich vorliegend nicht über die gesamte Länge des Gehäuses 22. Der hintere Endbereich 24 des Gehäuses 22 umfasst keinen Bandabschnitt mehr; das stromaufwärtige Ende des zweiten Transportbands 7 ist daher regelmässig durch eine Klappe vom Endbereich 24 abgetrennt.

In der vorderen Seitenwand 25 ist, vorzugsweise im Bereich der Gehäuseöffnung 23, ein weiterer Sensor S7 vorgesehen, welcher ebenfalls in Form einer Lichtschranke ausgebildet und mit der üblichen Steuerung verbunden ist.

Der Sensor S7 dient zur Kontrolle der An- bzw. Abwesenheit von Vorformlingen auf dem zweiten Transportband. Wenn der Sensor S7 keine Vorformlinge in seinem Bereich detektiert und gleichzeitig der Sensor S6 die Anwesenheit von Vorformlingen anzeigt, so hat ggf. eine Brückenbildung zwischen dem zweiten Transportband und der trichterartigen Vorrichtung bzw. dem senkrechten Schacht stattgefunden und es liegt eine Verstopfung vor. Hierauf wird ein Alarmsignal erzeugt und die Verstopfung muss manuell durch eine Bedienperson beseitigt werden.

### Bezugszeichenliste:

- 1: Förderanlage
- 2: Transportrollenband
- 3: Kippvorrichtung
- 4: Transport- und Zuführeinheit
- 5: erstes Transportband
- 5a: Abdeckung
- 6: trichterartige Vorrichtung (Speicher)
- 6a: Abdeckung
- 6b: senkrechter Auslauf
- 7: zweites Transportband
- 8: Hochförderer
- 9: Rollensortierer
- 9a: Rückführband 9a
- 10: Zuführeinheit
- 11: Klemmförderer
- 12: Ablaufschiene
- 13: Streckblasmaschine
- 14: Schräge
- 15: Seitenwand
- 15a: erhöhte Seitenwand
- 15b: Gitterteile
- 16: Halterungen für Abdeckungen
- 17: Schräge
- 18: Antrieb erstes Förderband
- 19: Gestell erstes Transportband
- 20: Gestell trichterartige Vorrichtung
- 21: Antrieb zweites Transportband
- 22: Gehäuse
- 23: obere Gehäuseöffnung
- 24: Endbereich
- 25: vordere Seitenwand
- 26: hintere Seitenwand
- 27: Kontrollfenster
- H1: Höhe erstes Transportband - Unterkante Auslauf
- H2: Höhe Unterkante Auslass - zweites Transportband
- L1: Länge erstes Transportband
- L2: Länge trichterartige Vorrichtung
- B1: Breite Transportband
- B2: Breite trichterartige Vorrichtung
- S1: Sensor erstes Transportband (Anfangsbereich)
- S2: Sensor erstes Transportband (mittlerer Bereich)
- S3: Sensor erstes Transportband (Endbereich)
- S4: Überfüllungssensor
- S5: Maximum-Sensor
- S6: Minimum-Sensor
- S7: Sensor zweites Transportband
- T1: Transportrichtung erstes Transportband
- T2: Transportrichtung zweites Transportband

## Patentansprüche

1. Transport- und Zuführeinheit für Vorformlinge, insbesondere für PET-Flaschen, wobei die Transport- und Zuführeinheit (4) an ihrem stromaufwärtigen Ende mit Vorformlingen beschickbar ist und die Vorformlinge einer am stromabwärtigen Ende der Transport- und Zuführeinheit (4) angeordneten Fördereinheit (8) zuführt, wobei die Transport- und Zuführeinheit (4) ein erstes Transportband (5) aufweist, wobei am stromabwärtigen Ende des ersten Transportbandes (5) eine trichterartige Vorrichtung (6) vorgesehen ist, wobei
die Transport-und Zuführeinheit (4) ein zweites Transportband (7) aufweist, wobei die Vorformlinge durch die trichterartige Vorrichtung (6) auf das zweite Transportband (7) gelangen, welches die Vorformlinge der an seinem stromabwärtigen Ende angeordneten Fördereinheit (8) zuführt, wobei das erste Transportband (5) als Softband ausgebildet ist, wobei im Bereich des ersten Transportbands (5) zumindest zwei Sensoren (S1; S3) zur Kontrolle der An- bzw. Abwesenheit von Vorformlingen entlang des ersten Transportbands (5) vorgesehen sind, wobei im Bereich der trichterartigen Vorrichtung (6) zumindest ein Maximum-Sensor (S5) und ein Minimum-Sensor (S6) zur Kontrolle des Füllstands mit Vorformlingen vorgesehen sind.

2. Transport- und Zuführeinheit nach Anspruch 1, **dadurch gekennzeichnet, dass** die trichterartige Vorrichtung (6) pyramidenstumpfförmig zusammenläuft und einen vorzugsweise senkrechten Auslauf (6b) aufweist.

3. Transport- und Zuführeinheit nach einem der vorhergehenden Ansprüche, **dadurch gekennzeichnet, dass** im Bereich der trichterartigen Vorrichtung weiterhin ein Überfüllungssensor (S4), zur Kontrolle des Füllstands mit Vorformlingen vorgesehen ist.

4. Transport- und Zuführeinheit nach einem der vorhergehenden Ansprüche, **dadurch gekennzeichnet, dass** im Bereich des zweiten Transportbands (7) zumindest ein weiterer Sensor (S7) zur Kontrolle der An- bzw. Abwesenheit von Vorformlingen auf dem zweiten Transportband (7) vorgesehen ist.

5. Transport- und Zuführeinheit nach einem der vorhergehenden Ansprüche, **dadurch gekennzeichnet, dass** das die Sensoren (S1-S7) als Lichtschranken ausgebildet sind.

6. Transport- und Zuführeinheit nach einem der vorhergehenden Ansprüche, **dadurch gekennzeichnet, dass** das zweite Transportband (7) als Softband ausgebildet ist.

7. Transport- und Zuführeinheit nach einem der vorhergehenden Ansprüche, **dadurch gekennzeichnet, dass** das erste Transportband (5) und das zweite Transportband (7) im rechten Winkel zueinander angeordnet sind.

8. Transport- und Zuführeinheit nach einem der vorhergehenden Ansprüche, **dadurch gekennzeichnet, dass** oberhalb des ersten Transportbands (5) sowie oberhalb der trichterartigen Vorrichtung (6) eine oder mehrere Abdeckungen (5a, 6a) anordenbar sind.

9. Transport- und Zuführeinheit nach einem der vorhergehenden Ansprüche, **dadurch gekennzeichnet, dass** am stromaufwärtigen Ende des ersten Transportbands (5) eine Schräge (14) angeordnet ist.

10. Transport- und Zuführeinheit nach einem der vorhergehenden Ansprüche, **dadurch gekennzeichnet, dass** das erste Transportband (5) eine Länge (L1) zwischen 1800 mm und 2200 mm, vorzugsweise von etwa 2000 mm aufweist.

## Claims

1. Transport and feed unit for preforms, in particular for PET bottles, wherein the transport and feed unit (4) can be loaded with preforms at its upstream end and feeds the preforms to a conveyor unit (8) arranged at the downstream end of the transport and feed unit (4), wherein the transport and feed unit (4) has a first conveyor belt (5), wherein a funnel-like device (6) is provided at the downstream end of the first conveyor belt (5), wherein the transport and feed unit (4) has a second conveyor belt (7), wherein the preforms pass through the funnel-like device (6) onto the second conveyor belt (7), which feeds the preforms to the conveyor unit (8) arranged at its downstream end, wherein the first conveyor belt (5) is designed as a soft belt, wherein at least two sensors (S1; S3) are provided in the region of the first conveyor belt (5) for monitoring the presence or absence of preforms along the first conveyor belt (5), wherein at least one maximum sensor (S5) and one minimum sensor (S6) are provided in the region of the funnel-like device (6) for monitoring the fill level with preforms.

2. Transport and feed unit according to claim 1, **characterized in that** the funnel-like device (6) converges in a truncated pyramid shape and has a preferably vertical outlet (6b).

3. Transport and feed unit according to one of the preceding claims, **characterized in that** an overfill sensor (S4) is further provided in the region of the funnel-like device to monitor the fill level with preforms.

4. Transport and feed unit according to one of the preceding claims, **characterized in that** at least one further sensor (S7) is provided in the region of the second conveyor belt (7) for monitoring the presence or absence of preforms on the second conveyor belt (7).

5. Transport and feed unit according to one of the preceding claims, **characterized in that** the sensors (S1-S7) are designed as light barriers.

6. Transport and feed unit according to one of the preceding claims, **characterized in that** the second conveyor belt (7) is designed as a soft belt.

7. Transport and feed unit according to one of the preceding claims, **characterized in that** the first conveyor belt (5) and the second conveyor belt (7) are arranged at right angles to each other.

8. Transport and feed unit according to one of the preceding claims, **characterized in that** one or more covers (5a, 6a) can be arranged above the first conveyor belt (5) and above the funnel-like device (6).

9. Transport and feed unit according to one of the preceding claims, **characterized in that** a slope (14) is arranged at the upstream end of the first conveyor belt (5).

10. Transport and feed unit according to one of the preceding claims, **characterized in that** the first conveyor belt (5) has a length (L1) between 1800 mm and 2200 mm, preferably of about 2000 mm.

## Revendications

1. Unité de transport et d'alimentation pour préformes, en particulier pour bouteilles en PET, dans laquelle l'unité de transport et d'alimentation (4) peut être chargée avec des préformes à son extrémité amont et alimente les préformes vers une unité de convoyage (8) disposée à l'extrémité aval de l'unité de transport et d'alimentation (4), dans laquelle l'unité de transport et d'alimentation (4) comporte une première bande transporteuse (5), dans laquelle un dispositif en forme d'entonnoir (6) est prévu à l'extrémité aval de la première bande transporteuse (5), dans laquelle l'unité de transport et d'alimentation (4) comporte une deuxième bande transporteuse (7), dans laquelle les préformes passent à travers le dispositif en forme d'entonnoir (6) sur la deuxième bande transporteuse (7), qui alimente les préformes vers l'unité de transport (8) disposée à son extrémité aval, dans laquelle la première bande transporteuse (5) est conçue comme une bande souple, dans laquelle au moins deux capteurs (S1 ; S3) sont prévus dans la zone de la première bande transporteuse (5) pour surveiller la présence ou l'absence de préformes le long de la première bande transporteuse (5), au moins un capteur de maximum (S5) et un capteur de minimum (S6) étant prévus dans la zone du dispositif en forme d'entonnoir (6) pour surveiller le niveau de remplissage avec des préformes.

2. Unité de transport et d'alimentation selon la revendication 1, **caractérisée en ce que** le dispositif en forme d'entonnoir (6) converge en une forme de pyramide tronquée et comporte une sortie (6b) de préférence verticale.

3. Unité de transport et d'alimentation selon l'une des revendications précédentes, **caractérisée en ce qu'**un capteur de débordement (S4) est en outre prévu dans la zone du dispositif en forme d'entonnoir pour surveiller le niveau de remplissage avec des préformes.

4. Unité de transport et d'alimentation selon l'une des revendications précédentes, **caractérisée en ce qu'**au moins un autre capteur (S7) est prévu dans la zone de la deuxième bande transporteuse (7) pour surveiller la présence ou l'absence de préformes sur la deuxième bande transporteuse (7).

5. Unité de transport et d'alimentation selon l'une des revendications précédentes, **caractérisée en ce que** les capteurs (S1-S7) sont conçus comme des barrières lumineuses.

6. Unité de transport et d'alimentation selon l'une des revendications précédentes, **caractérisée en ce que** la deuxième bande transporteuse (7) est conçue comme une bande souple.

7. Unité de transport et d'alimentation selon l'une des revendications précédentes, **caractérisée en ce que** la première bande transporteuse (5) et la deuxième bande transporteuse (7) sont disposées à angle droit l'une par rapport à l'autre.

8. Unité de transport et d'alimentation selon l'une des revendications précédentes, **caractérisée en ce qu'**un ou plusieurs couvercles (5a, 6a) peuvent être disposés au-dessus de la première bande transporteuse (5) et au-dessus du dispositif en forme d'entonnoir (6).

9. Unité de transport et d'alimentation selon l'une des revendications précédentes, **caractérisée en ce qu'**une pente (14) est disposée à l'extrémité amont de la première bande transporteuse (5).

10. Unité de transport et d'alimentation selon l'une des revendications précédentes, **caractérisée en ce que** la première bande transporteuse (5) a une longueur (L1) entre 1800 mm et 2200 mm, de préférence d'environ 2000 mm.
